Europäisches Patentamt

(19) European Patent Office

Office européen des brevets

(11) Numéro de publication: **0 026 119**
**B1**

(12) FASCICULE DE BREVET EUROPEEN

(45) Date de publication du fascicule du brevet:
**10.08.83**

(51) Int. Cl.³: **A 23 G 1/00,** A 23 C 11/04,
A 23 J 3/00

(21) Numéro de dépôt: **80401177.3**

(22) Date de dépôt: **11.08.80**

(54) **Nouveaux produits laitiers destinés à la fabrication de produits de chocolaterie et procédé de fabrication.**

(30) Priorité: **19.09.79 FR 7923356**

(43) Date de publication de la demande:
**01.04.81 Bulletin 81/13**

(45) Mention de la délivrance du brevet:
**10.08.83 Bulletin 83/32**

(84) Etats contractants désignés:
**BE DE GB IT LU NL**

(56) Documents cités:
**FR-A-2 095 138**
**FR-A-2 101 514**
**FR-A-2 233 946**
**FR-A-2 256 728**
**FR-A-2 302 046**
**FR-A-2 405 656**
**GB-A-1 472 510**
**US-A-3 868 469**
**US-A-4 017 645**

(73) Titulaire: **FROMAGERIES BEL, 4, rue d'Anjou,
F-75008 Paris (FR)**

(72) Inventeur: **Durand, Daniel, 8, rue Henri Dunant,
F-41100 Vendôme (FR)**
Inventeur: **Grandadam, Yves, 15 Square de Sologne,
F-41100 Vendôme (FR)**

(74) Mandataire: **Fruchard, Guy et al, NOVAPAT-CABINET
CHEREAU 107, boulevard Péreire, F-75017 Paris (FR)**

# Nouveaux produits laitiers destinés à la fabrication de produits de chocolaterie et procédé de fabrication

La présente invention se rapporte en général aux produits alimentaires et concerne, plus spécifiquement, un procédé de préparation de produits de remplacement partiel ou total du lait, utilisés pour fabriquer des produits de chocolaterie, notamment des produits à base de cacao et de chocolat ou renfermant des produits de remplacement de cacao et de pâtes à glacer. Elle se rapporte également aux nouveaux produits ainsi obtenus.

Dans la technique actuelle de fabrication de produits de chocolaterie renfermant du chocolat, du cacao ou des produits de remplacement de cacao, on utlise du lait en poudre partiellement ou totalement écrémé. Pour l'obtention de cette poudre de lait, on utilise généralement un procédé de séchage sur cylindres, employant un appareil de séchage à deux cylindres, rapprochés, tournant en sens inverse et chauffés intérieurement par de la vapeur d'eau. Le lait tombe entre les deux cylindres et se répartit uniformément à leur surface. De ce fait, la dessiccation est rapide, le lait formant un film qui est détaché par un couteau racleur.

Ce procédé de séchage sur cylindres présente néanmoins de nombreux inconvénients. Il est coûteux du point de vue énergétique et, de ce fait, on doit réaliser des installations de faibles dimensions; de plus, la qualité des produits n'est pas toujours constante et, quelquefois, des points de surchauffe à l'origine de mauvais goûts sont présents dans les produits.

Il existe d'autres procédés de séchage, notamment le procédé dit Spray, qui est moins cher et emploie une technique plus facile à maîtriser que le procédé de séchage sur cylindres. On a employé le procédé Spray pour la fabrication de poudre de lait entier ou écrémé devant être incorporée dans des produits de chocolaterie. Néanmoins, ce procédé pose des problèmes, car la poudre est peu performante en chocolaterie du fait de sa dimension et de la forme de ses particules et, en outre, du fait de la faible dénaturation des protéines. De plus, quand on emploie du lait entier, le produit obtenu pose des problèmes d'utilisation, notamment à cause de son taux en matière grasse libre.

Il est en outre connu de l'art antérieur d'utiliser le lait ainsi déshydraté pour la préparation d'un produit intermédiaire utile dans la fabrication du chocolat. La préparation d'un tel produit intermédiaire est en particulier décrite dans le brevet français Nº 2101514. Selon le procédé décrit dans ce brevet, on mélange 50 à 70% d'un agent édulcorant (saccharose, dextrose, etc.), 25 à 45% de solide de lait entier ou de lait écrémé, 2,5 à 7,5% de pâte de chocolat et 1 à 3% d'eau par rapport au poids total du mélange, puis l'ensemble est introduit dans une boudineuse de type Wenger et traité à une température de 105 à 127° C pendant 1 à 3 s.

Un objet de la présente invention est de prévoir un procédé permettant la préparation d'un produit intermédiaire texturé pouvant être utilisé dans la fabrication de chocolat en remplacement du lait en poudre.

Cet objet est atteint, selon la présente invention, par un procédé de préparation d'un produit de remplacement partiel ou total du lait, utilisé dans la fabrication de produits de chocolaterie, notamment de produits à base de cacao ou de chocolat ou renfermant des produits de remplacement de cacao et de pâtes à glacer, procédé dans lequel on introduit dans un dispositif de cuisson-extrusion au moins une matière première choisie dans le groupe se composant de lait, partiellement ou totalement écrémé, de lactosérum, de protéines de sérum, de caséines, de caséinates, de babeurre et de lactose, éventuellement avec de la matière grasse, du sucre et de la pâte de cacao, un ou plusieurs additifs et de l'eau, et en ce qu'on applique une pression comprise entre 20 et 100 bar, à une température de 40 à 90° C, pendant un temps de 30 s à 2 min.

La matière première est formée de lait, partiellement ou totalement écrémé, de lactosérum, de protéines de sérum obtenues par n'importe quel procédé (traitement thermique ou séparation par membranes comme par ultrafiltration), de caséines, de caséinates, de babeurre et de lactose. On peut aussi employer un mélange de deux (ou davantage) de ces matières. La matière première est généralement sous forme de liquide très concentré ou de poudre.

On peut ajouter, dans cette matière première, des matières grasses d'origine animale (par exemple la crème, le beurre, de la matière grasse laitière anhydre, le produit dit butteroil) ou végétale, en quantité de 0 à 40% par rapport au poids de la matière première. On peut, en particulier, ajouter de la matière grasse de cacao sous forme de beurre de cacao ou de pâte de cacao.

On peut également ajouter à la matière première des additifs choisis dans le groupe se composant d'émulsionnants (en particulier la lécithine ou les sucroglycérides), de bases telles que la soude, la potasse, l'amoniaque, etc., ou de sels tels que les phosphates de Na et Ca, les chlorures de Ca, de Na, de K, etc., qui permettent de modifier la structure des protéines et de fournir au produit à obtenir des propriétés technologiques souhaitées, telles que des caractéristiques rhéologiques intéressantes (fluidité plus ou moins grande, viscosité, limite d'écoulement).

La matière première et, éventuellement, les matières grasses, le sucre, la pâte de cacao et les additifs sont introduits sous forme de poudre ou sous forme de pâte dans un cuiseur-extrudeur. Si on désire former une pâte, on ajoute à la poudre de l'eau dont la quantité est déterminée en fonction de l'extrait sec qu'on veut obtenir; cette quantité est en général de 0 à 20%, de préférence environ 8 à 12%, par rapport aux poids de la matière première éventuellement additionnée de matières grasses et d'additifs.

Le cuiseur-extrudeur est de préférence un cuiseur-extrudeur bi-vis, qu'on utilise comme réacteur dans lequel on fait intervenir une température et une pression choisies en fonction du produit qu'on désire obtenir. Un cuiseur-extrudeur bi-vis du type de celui mis au point par la société dite Creusot-Loire est préféré, mais n'importe quel autre type de cuiseur-extrudeur bi-vis ou mono-vis peut être employé.

On choisit une température de réaction qui n'entraîne pas d'altération de la matière première et, éventuellement, des matières grasses, du sucre, de la pâte de cacao et des additifs, mais qui, éventuellement, selon le produit final désiré, favorise ou non une réaction de Maillard génératrice d'arôme particulier. Cette température est comprise dans l'intervalle de 40 à 90° C, de préférence 70 à 90° C.

La pression est déterminée par la quantité d'eau ajoutée dans la matière première, les matières grasses et les additifs; au début de la réaction, elle est généralement comprise entre 20 et 100 bar, de préférence entre 40 et 60 bar.

La température et la pression indiquées ci-dessus sont appliquées pendant un temps compris entre 30 s et 2 min. Les conditions de traitement sont aussi fonction de la teneur en matière grasse de l'ensemble des produits à traiter. Ainsi, si le produit contient de la matière grasse, on devra employer des températures et des pressions relativement peu élevées, sinon la matière grasse se sépare du produit, avec un risque de dégradation de cette matière.

Dans le cuiseur-extrudeur, le profil des vis est réglé de manière telle que le travail mécanique soit suffisant sans entraîner un échauffement de la matière première pendant la cuisson-extrusion. Pour cela, on utilise des filières ayant une surface de 30 à 300 mm² et des vis à configuration vis-plaques de 1,5 à 3,5 mm dans le cas d'un cuiseur-extrudeur du type BC 72 Creusot-Loire.

En sortant du cuiseur-extrudeur, le produit est à l'état semi-pâteux ou semi-sec selon la quantité d'eau ajoutée et la filière utilisée. Le produit est refroidi pour qu'il durcisse. Il est préférable que le produit obtenu soit sous forme de lamelles fines et légèrement friables; le rapport surface/volume pour le produit doit être le plus élevé possible afin d'augmenter la dessiccation et d'accélérer le refroidissement.

Pour donner au produit une dimension de particules correspondant à une granulation compatible avec l'utilisation en chocolaterie, ce produit est broyé en employant un broyeur à marteau ou un broyeur fin. Dans le cas de l'utilisation d'un broyeur à marteau, on obtient des particules dont la dimension (environ 100 μm) est semblable à celles des particules de poudre de lait obtenues pour le procédé classique. Dans le cas de broyeurs fins, du type de ceux qu'on peut se procurer à la société dite Ultrafine ou de broyeurs-sécheurs que l'on peut se procurer à la société dite Procalex, on obtient une dimension de particules qui varie de 15 à 30 μm. Ce dernier type de broyeur fournit au produit un séchage supplémentaire.

Après broyage, le produit obtenu peut être employé en chocolaterie, pour fabriquer notamment des produits à base de cacao et de chocolat ou renfermant des produits de remplacement de cacao et de pâtes à glacer, pour remplacer le lait séché par le procédé de séchage sur cylindres.

Le produit obtenu a des propriétés semblables à celles du produit traditionnel et présente de nombreux avantages: on obtient des produits de qualité constante, ne présentant pas de points de surchauffe; en outre, on peut faire varier le goût et la viscosité des produits en fonction des besoins de l'utilisateur grâce à l'emploi d'une quelconque des matières premières citées ou de leurs mélanges. De plus, la présente invention permet d'utiliser, comme matières premières, des produits bien moins coûteux que les produits traditionnels et de valoriser des sous-produits de la fromagerie et de la caséinerie. Un autre avantage de cette technique réside dans le fait qu'elle permet d'obtenir une meilleure conservation des produits.

La présente invention sera maintenant décrite à l'aide des exemples suivants, qui ne sont donnés qu'à titre d'illustration et non de limitation.

*Exemple 1*

On utilise le mélange de poudres suivantes:
— Lactosérum délactosé par ultrafiltration, à 19% de protéines     90,5%
— Caséinate de sodium     9,5%

Ce mélange est introduit dans un cuiseur-extrudeur dont les caractéristiques sont les suivantes:

Extrudeuse Creusot-Loire
Configuration vis-plaque: 2,5 mm
Filière plate: largeur: 25 mm
               épaisseur: 2 mm
Vitesse de rotation des vis: 50-70 tr/min

On emploie un chauffage par induction pour obtenir une température, à l'intérieur du fourreau, de 75-85° C.

Sitôt après l'introduction de la poudre, on injecte, par l'intermédiaire d'une pompe doseuse, la quantité d'eau nécessaire à l'obtention de l'extrait sec désiré du produit.

*Conditions de l'extrusion*

Débit de poudre à l'entrée: 70 kg/h
Eau ajoutée: 8 kg/h
Température: 75-85° C
Pression de sortie du produit: 35 bar

Le produit obtenu est alors refroidi pour qu'il durcisse, et il est ensuite broyé dans un broyeur à marteau afin que sa granulation moyenne soit de l'ordre de 100 μ. Cette poudre peut être alors utilisée de façon traditionnelle pour remplacer la poudre de lait dans la fabrication de produits à base de cacao et de chocolat ou renfermant des produits de remplacement de cacao et de pâtes à glacer.

*Exemple 2*

On utilise le mélange suivant:
— Lait écrémé en poudre     55,5%
— Lactosérum     18,5%
— Matière grasse lactique anhydre     26 %

Les caractéristiques de l'extrudeuse sont identiques à celles de l'exemple 1, mais les conditions opératoires sont les suivantes:

— Alimentation de poudres     50 kg/h
— Alimentation d'eau     5 kg/h
— Température     55-65° C
— Pression     20 bar

Le produit obtenu est ensuite refroidi et broyé dans des conditions identiques à celles de l'exemple 1.

La poudre obtenue est utilisable dans la fabrication de produits à base de cacao et de chocolat ou avec des produits de remplacement de cacao et de pâtes à glacer, pour remplacer le lait gras obtenu par le procédé de séchage sur cylindres. Les caractéristiques rhéologiques du chocolat (viscosité et limites d'écoulement) sont améliorées de 10 à 15% selon le taux d'incorporation de la poudre et les caractéristiques organoleptiques sont tout à fait équivalentes à celles d'un produit traditionnel, voire même améliorées en ce qui concerne le fondant.

## Revendications

1. Procédé de préparation de produits de remplacement partiel ou total du lait, utilisés dans la fabrication de produits de chocolaterie, notamment des produits à base de cacao et de chocolat ou renfermant des produits de remplacement de cacao et de pâtes à glacer, comportant l'étape d'introduire dans un dispositif de cuisson-extrusion au moins une matière première choisie dans le groupe se composant de lait, partiellement ou totalement écrémé, de lactosérum, de protéines de sérum, de caséines, de caséinates, de babeurre et de lactose, éventuellement avec de la matière grasse, du sucre, de la pâte de cacao, un ou plusieurs additifs et de l'eau, caractérisé en ce qu'on applique une pression comprise entre 20 et 100 bar, à une température de 40 à 90° C, pendant un temps de 30 s à 2 min.

2. Procédé selon la revendication 1, caractérisé en ce que le dispositif de cuisson-extrusion est choisi dans le groupe se composant de cuiseurs-extrudeurs mono-vis et de cuiseurs-extrudeurs bi-vis.

3. Procédé selon la revendication 1, caractérisé en ce que la matière première est sous forme de liquide très concentré ou de poudre.

4. Procédé selon l'une des revendications 1 à 3, caractérisé en ce qu'on introduit des matières grasses en quantité de 0 à 40% par rapport au poids de la matière première.

5. Procédé selon l'une des revendications 1 à 4, caractérisé en ce que les additifs sont constitués par au moins un produit choisi dans le groupe se composant d'émulsionnants, de bases et de sels.

6. Procédé selon l'une des revendications 1 à 5, caractérisé en ce que la quantité d'eau ajoutée est comprise entre 0 et 20% par rapport au poids de la matière première.

7. Procédé selon l'une des revendications 1 à 6, caractérisé en ce que le produit, sortant du dispositif de cuisson-extrusion, est refroidi et soumis à un broyage.

8. A titre de produits industriels nouveaux, produits de remplacement partiel ou total du lait, obtenus par le procédé selon l'une des revendications 1 à 7.

## Patentansprüche

1. Verfahren zur Herstellung von Produkten zum teilweisen oder vollständigen Ersetzen von Milch, zur Verwendung bei der Bereitung von Schokoladeerzeugnissen, insbesondere von Erzeugnissen auf Basis von Kakao und Schokolade oder Kakaoersatzstoffe enthaltend sowie Glasurmasse, das den Schritt des Eingebens wenigstens eines ersten Stoffes in einem Kochextrudierapparat aufweist, wobei der Stoff aus einer Gruppe ausgewählt wird, die sich aus teilweise oder vollständig entrahmter Milch, Lactoserum, Serumproteine, Caseine, Caseinate, Buttermilch und Lactose zusammensetzt, eventuell zusammen mit Fett, Zucker, Kakaomasse, einem oder mehreren Additiven und Wasser, dadurch gekennzeichnet, dass ein Druck zwischen 20 und 100 bar angelegt wird, bei einer Temperatur von 40 bis 90° C während eines Zeitraums von 30 s bis 2 min.

2. Verfahren nach Anspruch 1, dadurch gekennzeichnet, dass der Kochextrudierapparat aus einer Gruppe ausgewählt ist, die sich aus Kochextrudierapparaten mit zwei Schrauben zusammensetzt.

3. Verfahren nach Anspruch 1, dadurch gekennzeichnet, dass der erste Stoff eine stark konzentrierte Flüssigkeit ist oder Pulverform aufweist.

4. Verfahren nach einem der Ansprüche 1 bis 3, dadurch gekennzeichnet, dass Fettstoffe in einer Menge von 0 bis 40% bezüglich des Gewichts des ersten Stoffes eingegeben werden.

5. Verfahren nach einem der Ansprüche 1 bis 4, dadurch gekennzeichnet, dass die Additive aus wenigstens einem Produkt bestehen, das aus der Gruppe ausgewählt ist, die sich aus Emulgiermitteln, basischen Stoffen und Salzen zusammensetzt.

6. Verfahren nach einem der Ansprüche 1 bis 5, dadurch gekennzeichnet, dass die Menge an zugefügtem Wasser zwischen 0 und 20% bezüglich des Gewichts des ersten Stoffes beträgt.

7. Verfahren nach einem der Ansprüche 1 bis 6, dadurch gekennzeichnet, dass das den Kochextrudierapparat verlassende Produkt abgekühlt und zermahlen wird.

8. Als neues industrielles Erzeugnis, ein Produkt zum teilweisen oder vollständigen Ersetzen von Milch, das nach dem Verfahren gemäss einem beliebigen der Ansprüche 1 bis 7 erhalten wird.

## Claims

1. A method for preparing products replacing fully or partially milk, used in the manufacture of chocolate-making products, particularly products on basis of cocoa and chocolate or including products replacing cocoa and pastes to be frozen, comprising the steps of introducing in a baking-extruding device at least a raw material selected from the group consisting of milk which is partially or fully skimmed, lactoserum, serum proteins, caseins, caseinates, buttermilk and lactose, possibly with fatty material, sugar, cocoa paste, one or several additives and water, characterized in that a pressure comprised between 20 and 100 bar is applied, at a temperature of 40 to 90° C, for a time of 30 s to 2 min.

2. A method according to claim 1, characterized in that said baking-extruding device is selected from the group composed of monoscrew bakers-extruders and of bi-screw bakers-extruders.

3. A method according to claim 1, characterized in that the raw material is a very concentrated liquid or a powder.

4. A method according to any one of claims 1 to 3, characterized in that fatty materials are introduced in an amount of 0 to 40% with respect to the weight of the raw material.

5. A method according to any one of claims 1 to 4, characterized in that the additives consist of at least one product selected from the group consisting of emulsifying agents, bases and salts.

6. A method according to any one of claims 1 to 5, characterized in that the amount of added water is comprised within 0 and 20% with respect to the weight of the raw material.

7. A method according to any one of claims 1 to 6, characterized in that the product leaving said baking-extruding device is cooled and submitted to a crushing step.

8. As new industrial products, products replacing partially or fully milk, obtained by the method according to any one of claims 1 to 7.